**Europäisches Patentamt**

**European Patent Office**

**Office européen des brevets**

(19)

(11)  **EP 1 238 717 A2**

(12)  **EUROPÄISCHE PATENTANMELDUNG**

(43) Veröffentlichungstag:
**11.09.2002  Patentblatt 2002/37**

(51) Int Cl.⁷: **B08B 17/06**

(21) Anmeldenummer: **02002235.6**

(22) Anmeldetag: **30.01.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.03.2001  DE 10110589**

(71) Anmelder: **Creavis Gesellschaft für Technologie und Innovation mbH**
**45772 Marl (DE)**

(72) Erfinder:
• **Oles, Markus, Dr.**
  **45525 Hattingen (DE)**
• **Nun, Edwin, Dr.**
  **48727 Billerbeck (DE)**
• **Schleich, Bernhard, Dr.**
  **45657 Recklinghausen (DE)**

(54)  **Geometrische Formgebung von Oberflächen mit Lotus-Effekt**

(57)  Die Erfindung betrifft strukturierte Oberflächen, die Erhebungen einer mittleren Höhe von 50 nm bis 200 µm und einem mittleren Abstand von 50 nm bis 200 µm aufweisen, deren äußere Form durch eine mathematische Funktion mit einer Rotationssymmetrie bezüglich eines Maximum beschrieben werden.

**EP 1 238 717 A2**

**Beschreibung**

Die vorliegende Erfindung betrifft strukturierte Oberflächen mit einer niedrigen Oberflächenenergie.

Es ist bekannt, dass Oberflächen mit einer Kombination aus Mikrostruktur und geringer Oberflächenenergie interessante Eigenschaften aufweisen. Eine geeignete Kombination aus Struktur und Hydrophobie macht es möglich, dass schon geringe Mengen bewegten Wassers auf der Oberfläche haftende Schmutzpartikel mitnehmen und die Oberfläche vollständig reinigen (WO 96/04123; US 3 354 022). Stand der Technik gemäß EP 0 933 380 ist, dass für solche Oberflächen ein Aspektverhältnis von > 1 und eine Oberflächenenergie von weniger als 20 mN/m erforderlich ist. Das Aspektverhältnis ist hierbei definiert als der Quotient von Höhe zur Breite der Struktur.

Wasserabstoßende Oberflächen werden in der Literatur vielfach beschrieben. CH-PS-268 258 beschreibt ein Verfahren, bei dem durch Aufbringen von Pulvern wie Caloin, Talkum, Ton oder Silikagel, strukturierte Oberflächen erzeugt werden. Diese Patentschrift beschreibt allerdings nicht, wie die Korngrößenverteilung ist. Die Schrift bleibt auch schuldig, wie die Krümmungsradien der aufgebrachten Partikel sind.

PCT/EP 00/02424 kommt zu dem Ergebnis, dass es technisch möglich ist, Oberflächen von Gegenständen künstlich selbstreinigend zu machen. Die hierfür nötigen Oberflächenstrukturen aus Erhebungen und Vertiefungen haben einen Abstand zwischen den Erhebungen der Oberflächenstrukturen im Bereich von 0,1 bis 200 µm und eine Höhe der Erhebung im Bereich von 0,1 bis 100 µm. Die hierfür verwendeten Materialien müssen aus hydrophoben Polymeren oder haltbar hydrophobiertem Material bestehen. Ein Auslösen der Detergentien aus der Trägermatrix muss verhindert werden. Wie bei den zuvor beschriebenen Schriften wird auch hier keine Angabe über die geometrische Form oder die Krümmungsradien der verwendeten Strukturen gemacht.

Verfahren zur Herstellung dieser strukturierten Oberflächen sind ebenfalls bekannt. Neben der detailgetreuen Abformung dieser Strukturen durch eine Masterstruktur im Spritzguss- oder Prägeverfahren sind auch Verfahren bekannt, die das Aufbringen von Partikeln auf eine Oberfläche nutzen (US 5 599 489). Allen diesen Verfahren gemeinsam ist aber, dass das selbstreinigende Verhalten dieser Oberflächen durch ein sehr hohes Aspektverhältnis beschrieben wird.

Hohe Aspektverhältnisse (d. h. hohe, schmale Objekte) sind nur schwer technisch realisierbar und besitzen eine geringe mechanische Stabilität.

Es bestand daher die Aufgabe, Oberflächenstrukturen zu finden, die auch ohne ein hohes Aspektverhältnis der Erhebung, einen hohen Randwinkel mit Wasser, d. h. den sogenannten LOTUS-Effekt® aufweisen.

In der kürzlich erschienen Arbeit von G. Öner und T.J. McCarthy in Langmuir 2000, 16, 7777- 7782, zeigen die Autoren, dass kein Zusammenhang zwischen dem Aspektverhältnis und dem Fort- und Rückzugswinkel besteht. Der Kontaktwinkel ist somit unabhängig von der Höhe der Strukturen und, so beschreiben es die Autoren weiter, unabhängig von der Oberflächenchemie. Die Autoren berichten ferner, dass die Randwinkel unabhängig von den geometrischen Strukturen sind. Allerdings steigt der Rückzugswinkel mit zunehmendem Strukturabstand an. Dies widerspricht jedoch den Erfahrungen der Anmelderin.

Überraschenderweise wurde gefunden, dass ein Aspektverhältnis von > 1 nicht ausschlaggebend für den Effekt ist. Wichtiger als das Aspektverhältnis ist die richtige Krümmung dem Wasser zugewandten Seite. Diese Eigenschaft wird auch als Krümmungsverhalten der Oberfläche bezeichnet.

Es wurde gefunden, dass Strukturen mit Erhebungen, die durch stetige Funktionen beschrieben werden können, die eine durch das Maximum verlaufende Rotationssymmetrie aufweisen, sich deutlich hydrophober verhalten als Erhebungen, die durch nicht stetige geometrische Funktionen beschrieben werden können. Nicht stetige geometrische Form sind beispielsweise Zylinder oder Säulen mit einer rechteckigen Grundfläche. Bei dem Übergang von einer Fläche zur anderen liegt mathematisch immer eine Unstetigkeit vor, wie z. B. eine Stirnfläche einer Rechtecksäule zur Seitenfläche. Sobald der Übergang stetig mit einer Funktion beschrieben werden kann und beim Übergang von der Stirnfläche auf die Seitenfläche ein genügend großer Radius eingehalten wird, werden deutlich bessere Lotus-Eigenschaften erzielt. Im weiteren Verlauf können die Seitenflächen dann nach unten abfallen und ändern in der Sprachweise der Funktiontheorie noch einmal ihr Krümmungsverhalten von einem konvexen in ein konkaves Krümmungsverhalten. Der konkave Kurvenverlauf geht dann über in die Trägermatrix bzw. in das nächste Strukturelement.

Kurven die die Form eines Vesikels der sich abschnürt, oder den Kurvenverlauf eines Wassertropfens haben, zeigen einen besonders guten Effekt. Hierbei liegt technisch ein sogenannter Hinterschnitt vor.

Gegenstand der vorliegenden Erfindung sind daher strukturierte Oberflächen, die Erhebungen mit einer mittleren Höhe von 50 nm bis 200 µm und einem mittleren Abstand von 50 nm bis 200 um aufweisen, und deren äußere Form durch eine mathematische Funktion mit einer Rotationssymmetrie bezüglich eines Maximum beschrieben werden.

Die Erhebungen der erfindungsgemäßen Oberflächen können insbesondere durch Funktionen des Typs Exponentialfunktion, irrationale Funktion, eine Parabelfunktion oder eine trigonometrische Funktion beschrieben werden.

Die Erhebungen der erfindungsgemäßen Oberflächen können auch durch mathematische Kurven, insbesondere durch solche des Typs Kartesisches Blatt, Strophoide, Pascalsche Schnecke, Kardioide, Cassinische Kruve, verlängerte Zykloide und Epizykloiden oder eine Kombination aus diesen beschrieben werden.

Es ist zusätzlich möglich, dass die Funktion in der zweiten Ableitung (f''(x)) mindestens zwei Nullstellen aufweist und das die Funktion an diesen Stellen ≠ 0 ist. Die Nullstellen besitzen hier die formalen Kriterien für einen Wechsel im Krümmungsverhalten der Funktion; d.h. f''(a)=0 und f''(x) hat an der Stelle a ein Vorzeichenwechsel.

Alternativ können die Funktionen in der zweiten Ableitung keine Nullstellen aufweisen, sodass die Funktionen einen konvexen Verlauf zeigen.

Sämtliche Kurvenverläufe müssen rotationssymetrisch durch eine Schwerpunktsachse verlaufen. Der Einfachheit halber werden sie im Folgenden alle als zweidimensionaler Schnitt durch eine entsprechende dreidimensionale rotationssymmetrische Erhebung in Parameterdarstellung oder Funktionsdarstellung beschrieben:

### Parabelfunktion:

Der Form:

$$f(x) = ax^2 + bx + c$$

Mit der Rotationsachse: f(x) = -x/2a und dem Maximum

$$\left( \frac{-b}{2a}, \frac{4ac - b^2}{4a} \right)$$

Fig. 1 zeigt beispielhaft eine Parabelfunktion, die als Beschreibung für Erhebungen einer erfindungsgemäßen strukturierten Oberfläche dienen kann.

### Für irrationale Funktionen:

Der Form:

$$f(x) = \pm\sqrt{ax^2 + bx + c}$$

Für a<0 beschreibt diese Gleichung eine Ellipse, für a>0 eine Hyperbel. Die Extrempunkte sind:

$$\left( \frac{-b}{2a}, \pm\sqrt{\frac{\delta}{4a}} \right)$$

mit $\delta = 4ac - b^2$.

Fig. 2 zeigt beispielhaft irrationale Funktionen, die als Beschreibung für Erhebungen einer erfindungsgemäßen strukturierten Oberfläche dienen können.

### Für Exponentialfunktionen:

$$f(x) = ae^{bx+cx^2}$$

Die Kurve ist symmetrisch zur vertikalen Symmetrieachse x = -b / 2c, die x-Achse (in der vorliegenden Erfindung die Grundfläche) wird nicht geschnitten. Da dies eine Mathematische Forderung ist, wird in der Praxis die Funktion die Grundfläche schneiden.

Für c>0 hat diese Funktion eine interessante technische Eigenschaft. Obwohl sie keine Wendepunkte hat, d. h. immer konvex ist, zeigen Erhebungen deren Oberfläche dieser Funktion folgen, hervorragende Lotuseigenschaften. Die Funktion fällt von -∝ bis zum Minimum und wächst dann wieder bis +∝.

Für den Fall c<0 geht diese Funktion in eine Gausskurve über. Die Funktion steigt von x= -∝ bis zum Maximum und fällt dann wieder bis x= +∝. Das Maximum liegt bei

$$\left( \frac{-b}{2ac}, ae^{-b^2/4c} \right),$$

die Wendepunkte sind bei

$$\left( \frac{-b \pm \sqrt{-2c}}{2c}, ae^{\frac{-(b^2+2c)}{4c}} \right).$$

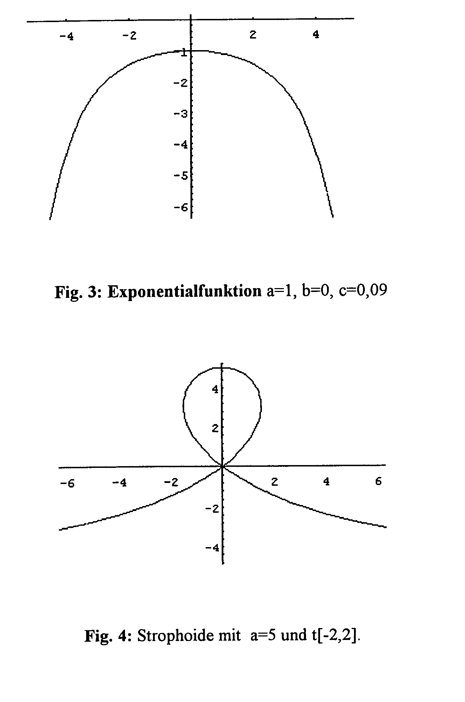

Fig. 3 zeigt beispielhaft eine Exponentialfunktion, die als Beschreibung für Erhebungen einer erfindungsgemäßen strukturierten Oberfläche dienen kann.

**Trigometrische Funktionen:**

Beispielsweise Sinus- oder Cosinus-Funktionen.

**Kartesisches Blatt:**

$$x^3 + y^3 - 3axy = 0$$

Bzw.

$$y = 3at^2/1 + t^3$$

$$x = 3at/1 + t^3$$

mit -∝<t<-1 und -1<t<∝.

**Strophoide:**

$$(x + a)x^2 + (x - a)y^2 = 0$$

*bzw.*

$$x = - at(t^2 - 1)/(t^2 + 1)$$

$$y = - a(t^2 - 1)/(t^2 + 1)$$

a>0 und $-\infty < t < \infty$

Fig. 4 zeigt eine Strophoide, die als Beschreibung für Erhebungen einer erfindungsgemäßen strukturierten Oberflächen dienen kann.

**Pascalsche Schnecke:**

$$(x^2 + y^2 - ax)^2 - l(x^2 + y^2) = 0$$

*bzw.*

$$y = a \cdot \cos^2 t + l \cdot \cos t$$

$$x = a \cdot \cos t \cdot \sin t + l \cdot \sin t$$

a>0, 1>0 und $0 \leq t < 2\pi$

besonders geeignet sind Kurven mit den Parametern a<1<2a und a>1.

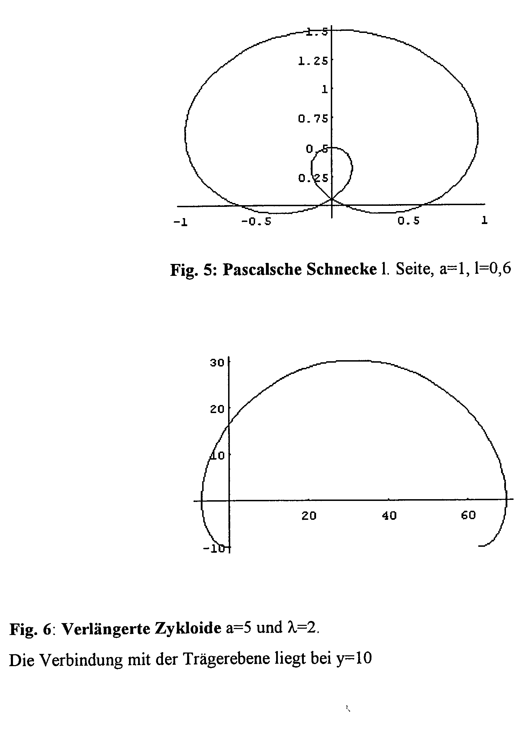

Fig. 5 zeigt eine Pascalsche Schnecke, die als Beschreibung für Erhebungen einer erfindungsgemäßen strukturierten Oberfläche dienen kann.

**Kardioide:**

$$(x^2 + y^2)(x^2 + y^2 - 2ax) - a^2 y^2 = 0$$

*bzw.*

$$x = a \cdot \cos t \cdot (1 + \cos t)$$

$$y = a \cdot \sin t \cdot (1 + \cos t)$$

mit a>0 und $0 \leq t < 2\pi$

in der Polarkoordinaten Darstellung:

$$\rho = a(1 + \cos\varphi)$$

**Cassinische Kurve:**

$$(x^2 + y^2)^2 - 2c^2(x^2 - y^2) - (a^4 + c^4) = 0$$

und c>0, a>0

besonders geeignet sind Kurven für die gilt: $c < a < c\sqrt{2}$

**Verlängerte Zykloide:**

$$x = a(t - \lambda \cdot \sin t)$$

$$y = a(t - \lambda \cdot \cos t)$$

mit $\lambda > 1$.

Fig. 6 zeigt eine verlängerte Zykloide, die als Beschreibung für Erhebungen einer erfindungsgemäßen strukturierten Oberfläche dienen kann.

**Epizykloiden:**

$$x = a(2 \cdot \cos \varphi - \lambda \cdot \cos(2\varphi))$$

$$y = a(2 \cdot \sin \varphi - \lambda \cdot \sin(2\varphi))$$

mit: $a>0$, $-\infty<\varphi<\infty$

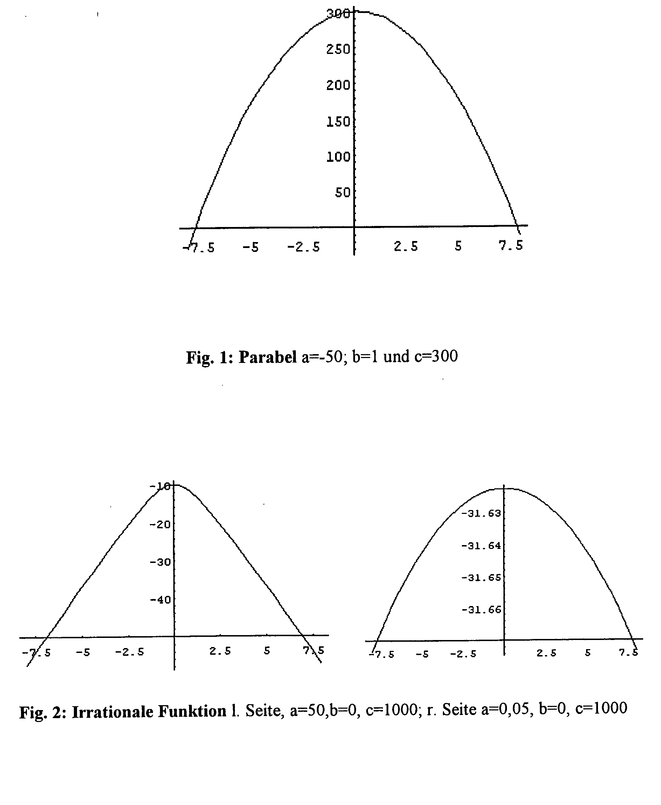

Die Figuren 1 bis 6 zeigen beispielhaft erfindungsgemäße Erhebungen und deren mathematische Kurven bzw. Funktionen.

Die Schnittfläche der Funktionen oder Kurven mit der Grundlinie kann an beliebigen Stellen erfolgen und entspricht in der Realität der Grundfläche der Trägermatrix. Die Schnittfläche der Kurven mit der Grundfläche erfolgt bei der Strophoide und bei der Pascalschen Schnecke bei y=0 und bei der verlängerten Zykloide bei y=-10 und entspricht in der Realität der Grundfläche der Trägermatrix.

Die Höhe der Erhebungen kann über deren Abstand definiert werden. Bevorzugt weisen diese Funktionen eine Amplitude von mindestens 3/10 des Abstandes zwischen den Erhebungen auf.

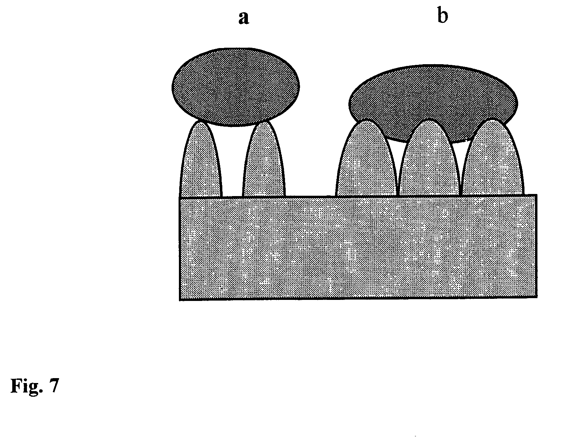

Die Erhebungen der erfindungsgemäßen Strukturen ändern bevorzugt nicht ihr Krümmungsverhalten, d. h. es liegen konvexe Erhebungen vor. Möglich ist, dass nur die der dem Wassertropfen zugewandte Seite der Erhebungen konvex ist. Ein auf mehreren benachbart liegenden Erhebungen liegender Wassertropfen löst sich dann schnell von der Oberfläche. Durch die Oberflächenspannkraft des Wassers versucht der Wassertropfen eine Kugelgestallt anzunehmen und sucht so wenig Kontaktpunkte mit der Oberfläche. Die beschriebenen Funktionen bzw. Kurvenarten sind so gewählt, das sich der Tropfen schnell von der Oberfläche lässt und nicht tief in die Strukturen zieht. Dieser Sachverhalt ist in Fig. 7 exemplarisch dargestellt. Fig. 7 zeigt auf der linken Seite (a) eine Oberfläche mit Strukturen ein erfindungsgemäßes Verhalten, die den Tropfen nur sehr wenig Kontaktpunkte liefert, die rechte Seite (b) zeigt eine Struktur, bei der sehr große Kontaktflächen zwischen Tropfen und Oberfläche bestehen. Auf der rechten Seite der Abbildung ist diese Bedingung nicht erfüllt und der Tropfen zieht sich tief in die Struktur.

Die geometrische Form der Erhebungen wird im Idealfall durch die genannten mathematischen Funktionen beschrieben, technisch ist eine Abformung allerdings nur mit einer Abweichung möglich.

Die Abweichung der Erhebungen der erfindungsgemäßen strukturierten Oberfläche von den mathematischen Funktionen kann durch einen Fit der Oberflächen, der bewertet mit dem $\chi^2$-Test ein Signifikanzniveau $\alpha < 0,05$ nicht überschreitet, angegeben werden.

Weiterhin ist es möglich, dass die Kontaktfläche der Erhebungen mit der Trägerebene kleiner als die Projektion der Kontur der Erhebungen auf die Trägerebene ist.

Die Herstellung der erfindungsgemäßen Oberflächen kann wie in EP 0 933 380 oder WO 96/04 123 beschrieben, erfolgen.

Geeignete Materialien sind z. B.

| | |
|---|---|
| Elemente: | Gold, Titan, Silizium, Kohlenstoff, |
| Anorganische Verbindungen: | Quarzglas, Lithiumniobat, Siliciumnitrid, Hydroxylapatit |
| Polymere: | PMMA, Silikone, Epoxydharze, Polydioxanon, Polyamid, Polyimid, Kollagen, Fibronectin, Fibrin |

Werkstoffe im Sinne der vorliegenden Erfindung sind Produkte, die bereits ihre endgültige Verwendungsform besitzen, Halbzeuge oder Vorprodukte wie z. B. Folien, die noch einen formgebenden Prozeß, wie z. B. Schmelzen, Gießen oder Extrudieren durchlaufen müssen. Erfindungsgemäß strukturierte Oberflächen weisen besonders hohe Randwinkel auf.

Außerdem ist Gegenstand der vorliegenden Erfindung die Verwendung der strukturierten Oberfläche zur Herstellung von mit polaren oder unpolaren Flüssigkeiten nicht oder nur schwer benetzbare Erzeugnissen.

Erfindungsgemäß strukturierte Oberflächen weisen besonders hohe Randwinkel auf. Dies verhindert weitgehend die Benetzung der Oberfläche und führt zu einer raschen Tropfenbildung. Die Tropfen können bei entsprechender Neigung der Oberfläche auf den Erhebungen abrollen, nehmen hierbei Schutzpartikel auf und reinigen somit gleichzeitig die Oberfläche.

Oberflächen im Sinne der vorliegenden Erfindung sind nicht nur hydrophob, sondern auch oleophob. Diese Eigenschaft erweitert die Anwendungsbereiche der strukturierten Oberflächen auch auf Gebieten, wo mit ölhaltigen Flüssigkeiten oder Verschmutzungen zu rechnen ist, so z. B. Straßen-, Bahn- und Flugverkehr sowie in industriellen Fertigungsanlagen.

Gegenstände mit erfindungsgemäß strukturierten Oberflächen sind sehr leicht zu reinigen. Sofern abrollende Tropfen von z. B. Regenwasser, Tau oder sonstigem, im Einsatzbereich des Gegenstandes vorkommenden Wasser zur Reinigung nicht ausreichen, können die Gegenstände durch einfaches Abspülen mit Wasser gereinigt werden.

Bakterien und andere Mikroorganismen benötigen zur Adhäsion an eine Oberfläche oder zur Vermehrung an einer Oberfläche Wasser, welches an den hydrophoben Oberflächen der vorliegenden Erfindung nicht zur Verfügung steht. Erfindungsgemäß strukturierte Oberflächen verhindern das Anwachsen von Bakterien und anderen Mikroorganismen und sind somit bakteriophob und/oder antimikrobiell.

Die Charakterisierung von Oberflächen bezüglich ihrer Benetzbarkeit kann über die Messung der Oberflächenenergie erfolgen. Diese Größe ist z. B. über die Messung der Randwinkel am glatten Material von verschiedenen Flüssigkeiten zugänglich (D. K. Owens, R. C. Wendt, J. Appl. Polym. Sci. 13, 1741 (1969)) und wird in mN/m (Milli-Newton pro Meter) angegeben. Nach Owens et al. bestimmt, weisen glatte Polytetrafluorethylen-Oberflächen eine Oberflächenenergie von 19,1 mN/m auf, wobei der Randwinkel mit Wasser 110 ° beträgt. Allgemein besitzen hydrophobe Materialien mit Wasser Kontakt- oder Randwinkel von über 90°.

Die Bestimmung des Randwinkels bzw. der Oberflächenenergie erfolgt zweckmäßig an glatten Oberflächen, um eine bessere Vergleichbarkeit zu gewährleisten. Die Materialeigenschaft "Hydrophobie" wird durch die chemische Zusammensetzung der obersten Molekülschicht der Oberfläche bestimmt. Ein höherer Randwinkel bzw. niedrigere Oberflächenenergie eines Materials kann daher auch durch Beschichtungsverfahren erreicht werden.

Der makroskopisch beobachtete Randwinkel ist somit eine Oberflächeneigenschaft, welche die Materialeigenschaft plus die Oberflächenstruktur wiederspiegelt.

Eine besonders niedrige Oberflächenenergie ist insbesondere dann notwendig, wenn nicht nur hydrophobes, sondern auch oleophobes Verhalten gefordert ist. Dies ist insbesondere bei nichtfesten, öligen Verschmutzungen der Fall. Diese führen nämlich bei nicht-oleophoben Oberflächen zu einer Benetzung mit Öl, was die genannten Eigenschaften nachhaltig negativ beeinflußt.

In jedem Fall sollte die Oberflächenenergie der glatten, nichtstrukturierten Oberflächen unterhalb von 20 mN/m, vorzugsweise bei 10 bis 20 mN/m liegen.

Um die aufgabengemäßen, niedrigen Randwinkel zu erreichen, sind neben den strukturellen auch die chemischen Eigenschaften des Materials von Bedeutung. Hier ist insbesondere die chemische Zusammensetzung der obersten Monolage des Materials entscheidend.

Erfindungsgemäße Oberflächen können daher aus Materialien hergestellt werden, die bereits vor der Strukturierung ihrer Oberfläche hydrophobes Verhalten aufweisen. Diese Werkstoffe beinhalten insbesondere Bulkpolymere mit Polytetrafluorethylen, Polyvinylidenfluorid oder Polymere aus Perfluoralkoxyverbindungen, sei es als Homo- oder Copolymer oder als Mischungsbestandteil eines Polymerblends.

Weiterhin sind Mischungen von Polymeren mit Additiven denkbar, die sich beim Formungsprozeß so ausrichten, daß an der Oberfläche hydrophobe Gruppen vorherrschen. Als Additiv kommen fluorierte Wachse, z. B. die Hostaflone der Hoechst AG in Frage.

Die Strukturierung der Oberfläche kann nach der hydrophoben Beschichtung eines Werkstoffs durchgeführt werden.

Die chemischen Modifikationen können auch nach der Formgebung durchgeführt werden, so daß die Erhebungen nachträglich mit einem Material mit einer Oberflächenenergie von 10 bis 20 mN/m ausgestattet werden können.

Da insbesondere die chemischen Eigenschaften der obersten Monolage des Materials für den Randwinkel entscheidend sind, kann gegebenenfalls eine Oberflächenmodifikation mit Verbindungen, die hydrophobe Gruppen enthalten, ausreichen. Verfahren dieser Art beinhalten die kovalente Anbindung von Monomeren oder Oligomeren an die Oberfläche durch eine chemische Reaktion, so z. B. Behandlungen mit Alkylfluorsilanen wie Dynasilan F 8261 der Sivento Chemie Rheinfelden GmbH oder mit fluorierten Ormoceren.

Weiterhin sind Verfahren, bei denen zunächst Radikalstellen auf der Oberflläche erzeugt werden, die bei An- oder Abwesenheit von Sauerstoff mit radikalisch polymerisierbaren Monomeren abreagieren, zu nennen. Die Aktivierung der Oberflächen kann mittels Plasma, UV- oder γ-Strahlung, sowie speziellen Photoinitiatoren erfolgen. Nach der Aktivierung der Oberfläche, d. h. Erzeugung von freien Radikalen können die Monomeren aufpolymerisiert werden. Ein solches Verfahren generiert eine mechanisch besonders widerstandsfähige Beschichtung.

Die Beschichtung eines Werkstoffs oder einer strukturierten Oberfläche durch Plasmapolymerisation von Fluoralkenen oder ganz oder teilweise fluorierten Vinylverbindungen hat sich besonders bewährt.

Die Hydrophobierung einer strukturierten Oberfläche mittels einer HF-Hohlkathoden-Plasmaquelle mit Argon als Trägergas und $C_4F_8$ als Monomer bei einem Druck von ca. 0.2 mbar stellt eine technisch einfache und elegante Variante zur nachträglichen Beschichtung dar.

Außerdem kann ein bereits gefertigter Gegenstand mit einer dünnen Schicht eines hydrophoben Polymeren überzogen werden. Dies kann in Form eines Lackes oder durch Polymerisation von entsprechenden Monomeren auf der Oberfläche des Gegenstandes erfolgen. Als polymerer Lack können Lösungen oder Dispersionen von Polymeren wie z. B. Polyvinylidenfluorid (PVDF) oder Reaktivlacke zum Einsatz kommen.

Als Monomere für eine Polymerisation auf den Werkstoffen oder deren strukturierten Oberflächen kommen insbesondere Alkylfluorsilane wie Dynasilan F 8261 (Sivento Chemie Rheinfelden GmbH, Rheinfelden) in Frage.

Die Formgebung oder Strukturierung der Oberflächen kann durch Prägen/Walzen oder gleichzeitig beim makroskopischen Formen des Gegenstandes wie z. B. Gießen, Spritzgießen oder andere formgebende Verfahren erfolgen. Hierzu sind entsprechende Negativformen der erwünschten Struktur erforderlich.

Negativformen lassen sich industriell z. B. mittels der Liga-Technik (R. Wechsung in Mikroelektronik, 9, (1995) S. 34 ff) herstellen. Hier wird zunächst eine oder mehrere Masken durch Elektronenstrahllithographie nach den Dimensionen der gewünschten Erhebung hergestellt. Diese Masken dienen zur Belichtung einer Photoresistschicht durch Röntgentiefenlithographie, wodurch eine Positivform erhalten wird. Die Zwischenräume im Photoresist werden anschließend durch galvanische Abscheidung eines Metalls aufgefüllt. Die so erhaltene Metallstruktur stellt eine Negativform für die gewünschte Struktur dar.

Die Erhebungen können eine periodische Anordnung besitzen. Es sind jedoch auch stochastische Verteilungen der Erhebungen zulässig.

Erfindungsgemäß hergestellte Oberflächen sind ab einer Strukturierung kleiner 400 nm transparent und eignen sich daher für alle Anwendungen, bei denen es auf eine hohe Transmission oder gute optische Eigenschaften ankommt. Hier ist besonders die Herstellung oder Beschichtung von Scheinwerfern, Windschutzscheiben, Werbeflächen oder Abdeckung von Solarzellen (photovoltaisch und thermisch) zu nennen.

Ein weiteres Anwendungsgebiet für die erfindungsgemäßen Oberflächen sind rückstandsfrei zu entleerende Behälter oder schnell zu reinigende Halterungen wie zum Beispiel Waferhalterungen in der Halbleiterproduktion. Wafer werden innerhalb ihres Herstellungsprozesses mit speziellen Halterungen (Cassetten) in verschiedene Bäder transportiert. Um ein Weitertragen der verschiedenen Badflüssigkeiten zu vermeiden, sind Reinigungsschritte, insbesondere der Halterungen, erforderlich. Die Reinigungs- oder Trocknungsschritte entfallen, wenn die jeweilige Badflüssigkeit beim Entfernen des Wafers aus dem Bad von der Halterung restlos abtropft.

Erfindungsgemäße Oberflächen eignen sich daher hervorragend zur Herstellung von Erzeugnissen, deren Oberfläche das Ablaufen von Flüssigkeiten begünstigt. Bevorzugt werden erfindungsgemäße Oberflächen zur Herstellung von Erzeugnissen verwendet, die sich durch ablaufendes Wasser selbst reinigen oder entleeren. Bevorzugte Verwendungen sind Behälter, transparente Körper, Pipetten, Reaktionsgefäße, Folien, Halbzeuge oder Halterungen.

Die nachfolgenden Beispiele sollen die vorliegende Erfindung näher beschreiben, ohne ihren Umfang zu beschränken.

**Beispiel 1:**

Die beschriebenen Strukturen können z. B. durch ein Spritzgußverfahren in Kombination mit einem durch LIGA-Verfahren hergestellten, konventionellen Spritzgußwerkzeug hergestellt werden. Das LIGA-Verfahren ist ein Strukturierungsverfahren, das auf Grundprozessen der Röntgen-**LI**thographie, **G**alvanik und **A**bformung beruht. Das Verfahren unterscheidet sich von der Mikromechanik dadurch, daß die Strukturen nicht durch ein Ätzprozeß im Grundmaterial erzeugt werden, sondern über ein Werkzeug kostengünstig abgeformt werden können. Im vorliegenden Fall dient das LIGA-Verfahren zur Herstellung des Werkzeugs. Die irrationale Funktion

$$f(x) = \pm \sqrt{ax^2 + bx + c}$$

wird mit den Parametern a=50, b=0, c=1000 in ein strahlungsempfindliches Polymer belichtet. Hierbei werden die Erhebungen gemäß der in Fig. 2, linke Seite dargestellten Funktion hergestellt. Die irrationale Funktion wird im Intervall -7,5 bis 7,5 abgebildet und die Skalierung beträgt $10^{-7}$ m, d.h. es werden Erhebungen mit einem Abstand von ca. 1,5 um Breite und einer Höhe von 1 μm in das Polymer gebracht. Diese Struktur wird nun periodisch im Abstand von 1,5 μm in das Polymer belichtet. Somit entsteht eine Periodische Muster von "Bergspitzen" die eine Periode von 1,5 μm und eine Höhe von 1 μm aufweisen. Nach der lithografischen Resistbelichtung in das strahlungsempfindliche Polymer und der Entwicklung wird die so erzeugte Lackstruktur als Form für einen Galvanikprozeß verwendet, bei dem in die freigelegten Zwischenräume eine Metallegierung abgeschieden wird.

Anschließend wird die Lackstruktur entfernt und die übrig gebliebene Metallstruktur wird zum Abformwerkzeug benutzt (G. Gerlach, W. Dötzel "Grundlagen der Mikrostystemtechnik" Carl Hanser Verlag München, 1997, Seite 60f).

Mit diesem Werkzeug wurden Strukturen in Poly(propylen) abgeformt. Anschließend wurde die Form einer UV-Strahlung von 254 nm für zwei Minuten ausgesetzt. Auf die so aktivierten Oberflächen wurde thermisch Fluoralkylacrylat aufgepfropft. Durch diese Vorgehensweise wurde die Oberflächenenergie von etwa 28 mN/m auf weniger als 15 mN/m reduziert.

Die so hergestellten Strukturen weisen eine hervorragenden Lotus-Effect auf.

**Beispiel 2:**

Die beschriebenen Strukturen können z. B. durch ein Spritzgußverfahren in Kombination mit einem durch LIGA-Verfahren hergestellten, konventionellen Spritzgußwerkzeug hergestellt werden. Das LIGA-Verfahren ist ein Strukturierungsverfahren, das auf Grundprozessen der Röntgen-**LI**thographie, **G**alvanik und **A**bformung beruht. Das Verfahren unterscheidet sich von der Mikromechanik dadurch, daß die Strukturen nicht durch ein Ätzprozeß im Grundmaterial erzeugt werden, sondern über ein Werkzeug kostengünstig abgeformt werden können. Im vorliegenden Fall dient das LIGA-Verfahren zur Herstellung des Werkzeugs. Eine Funktion des Typs "verlängerte Zykloide" wird mit den Parametern a=5 und λ=2 in ein strahlungsempfindliches Polymer belichtet. Hierbei werden Erhebungen gemäß der in Fig. 6 dargestellten Funktion erzeugt. Die Kurve wird im Intervall von 0 bis 2π abgebildet und die Skalierung beträgt $10^{-7}$ m, d.h. es werden Erhebungen mit einem Abstand von ca. 3 μm Breite und einer Höhe von einem 1 μm in das Polymer gebracht. Diese Struktur wird nun periodisch im Abstand von 3 μm in das Polymer belichtet. Somit entsteht eine Periodische Muster von "Bergen" die eine Periode von 3 μm und eine Höhe von 1 μm aufweisen. Nach der lithografischen Resistbelichtung in das strahlungsempfindliche Polymer und der Entwicklung wird die so erzeugte Lackstruktur als Form für einen Galvanikprozeß verwendet, bei dem in die freigelegten Zwischenräume eine Metallegierung abgeschieden wird.

Anschließend wird die Lackstruktur entfernt und die übrig gebliebene Metallstruktur wird zum Abformwerkzeug benutzt (G. Gerlach, W. Dötzel "Grundlagen der Mikrostystemtechnik" Carl Hanser Verlag München, 1997, Seite 60 f.).

Mit diesem Werkzeug wurden Strukturen in Poly(propylen) abgeformt. Anschließend wurde die Form einer UV-Strahlung von 254 nm für zwei Minuten ausgesetzt. Auf die so aktivierten Oberflächen wurde thermisch Fluoralkylacrylat aufgepfropft Durch diese Vorgehensweise wurde die Oberflächenenergie von etwa 28 mN/m auf weniger als 15 mN/m reduziert.

Die so hergestellten Strukturen weisen eine hervorragenden Lotus-Effect auf.

**Patentansprüche**

**1.** Strukturierte Oberflächen,
**dadurch gekennzeichnet,**
**dass** sie Erhebungen mit einer mittleren Höhe von 50 nm bis 200 μm und einem mittleren Abstand von 50 nm bis 200 μm aufweisen, deren äußere Form durch eine mathematische Funktion mit einer Rotationssymmetrie bezüglich eines Maximum beschrieben werden.

**2.** Strukturierte Oberflächen nach Anspruch 1,
**dadurch gekennzeichnet,**
**dass** die mathematische Funktion eine Exponentialfunktion, eine irrationale Funktion, eine Parabelfunktion oder eine trigonometrische Funktion ist.

**3.** Strukturierte Oberflächen nach Anspruch 1,
**dadurch gekennzeichnet,**
**dass** die mathematische Funktion eine mathematische Kurve ist.

**4.** Strukturierte Oberflächen nach Anspruch 3,
**dadurch gekennzeichnet,**

**dass** die mathematische Kurve des Typs Karthesisches Blatt, Strophoide, Pascalsche Schnecke, Kardioide, Cassinische Kurve, verlängerte Zykloide und Epizykloide oder eine Kombination aus diesen ist.

5. Strukturierte Oberfläche nach einem der Ansprüche 1 bis 4,
**dadurch gekennzeichnet,**
**dass** die Kontaktfläche der Erhebungen mit der Trägerebene kleiner als die Projektion der Kontur der Erhebungen auf die Trägerebene ist.

6. Strukturierte Oberfläche nach einem der Ansprüche 1 bis 5,
**dadurch gekennzeichnet,**
**dass** die Funktion eine Amplitude von mindestens 3/10 des Abstandes zwischen den Erhebungen aufweist.

7. Strukturierte Oberfläche nach einem der Ansprüche 1 bis 6,
**dadurch gekennzeichnet,**
**dass** die Funktion in der zweiten Ableitung mindestens zwei Nullstellen aufweist und die Funktion an diesen Stellen $\neq 0$ ist.

8. Strukturierte Oberfläche nach einem der Ansprüche 1 bis 6,
**dadurch gekennzeichnet,**
**dass** die Funktion in der zweiten Ableitung keine Nullstellen aufweist.

9. Verwendung der strukturierten Oberfläche nach einem der Ansprüche 1 bis 8 zur Herstellung von Behältern, Pipetten, Folien, Halbzeugen oder Reaktionsgefäßen.

**Fig. 1: Parabel** a=-50; b=1 und c=300

**Fig. 2: Irrationale Funktion** l. Seite, a=50,b=0, c=1000; r. Seite a=0,05, b=0, c=1000

**Fig. 3: Exponentialfunktion** a=1, b=0, c=0,09

**Fig. 4:** Strophoide mit  a=5 und t[-2,2].

**Fig. 5: Pascalsche Schnecke** l. Seite, a=1, l=0,6

**Fig. 6**: **Verlängerte Zykloide** a=5 und λ=2.

Die Verbindung mit der Trägerebene liegt bei y=10

Fig. 7